# EUROPEAN PATENT APPLICATION

(11) **EP 4 279 335 A1**
(43) Date of publication of application: **22.11.2023**
(21) Application number: 22173697.8
(22) Date of filing: 17.05.2022
(51) Int. Cl.: B60R 3/02

(54) **A FRONT LOWER PART OF A HEAVY VEHICLE**

(71) Applicant: VOLVO TRUCK CORPORATION, 405 08 Göteborg (SE)
(72) Inventor: Venkitachalam, Muthukumar, Kerala 695014 (IN); Bergqvist, Hans, Torslanda 423 53 (SE)
(74) Representative: Germain Maureau

(57) **Abstract**

The invention relates to a front lower part (1) of a heavy vehicle (100), such as a truck, comprising a front underrun protection (2) and a footstep assembly (3) mounted on said front underrun protection (2), the footstep assembly (3) comprising:
- a main support (4) configured to be coupled to the front underrun protection (2),
- a first step (5) hingedly connected to the main support (4) such that it can rotate from a close position, in which it is vertically oriented, and an open position, in which it is aligned in a first horizontal plane (H1),
- a second step (6) hingedly connected to the main support (4) such that it can rotate from a folded position, in which it is vertically oriented and hidden by the first step (5) when said first step (5) is in its close position, and a unfolded position, in which it is aligned in a second horizontal plane (H2) that is above the first horizontal plane (H1) and vertically offset therefrom.

## Description

### TECHNICAL FIELD

The invention relates to a front lower part of a heavy vehicle. The invention can be applied in heavy-duty vehicles, such as trucks, buses and construction equipment. Although the invention will be described with respect to a truck, the invention is not restricted to this particular vehicle.

### BACKGROUND

Due to their height, trucks and other heavy vehicles are commonly provided with a footstep to permit to a user to access to the windscreen or other upper parts of the cab for performing maintenance or cleaning operations.

This footstep is generally mounted on the front underrun protection and comprises only one step. However, a user standing on this single step may still have difficulties to clean the upper parts of the cab. A solution to this problem may consist in providing two vertically offset steps at the front of the cab. However, these two steps may impact negatively on the aerodynamics of the vehicle.

### SUMMARY

An object of the invention is to provide a front lower part of a heavy vehicle comprising two vertically offset steps at the front of the cab that does not impact negatively on the aerodynamics of the vehicle.

The object is achieved by a front lower part according to claim 1.

Thus configured, the front lower part of the present invention permits, when the vehicle is stopped for performing maintenance operations, to easily access to the upper parts of the cab when the first step is in its open position and the second step is in unfolded position. When the vehicle is moving, the first step can be closed and the second step folded, thus conferring a good aerodynamic performance to the vehicle.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 shows a truck provided with a front lower part according to the invention,
Fig. 2a is a front perspective view of the front lower part shown in Figure 1, when the first step is in its close position and the second step is in its folded position,
Fig. 2b is a side view of the front lower part shown in Figure 2a,
Fig. 3a is a front perspective view of the front lower part shown in Figure 1, when the first step is in its open position and the second step is in its folded position,
Fig. 3b is a side view of the front lower part shown in Figure 3a,
Fig. 4a is a front perspective view of the front lower part shown in Figure 1, when the first step is in its open position and the second step is in its unfolded position,
Fig. 4b is a side view of the front lower part shown in Figure 4a,

### DETAILED DESCRIPTION OF EXAMPLE EMBODIMENTS OF THE INVENTION

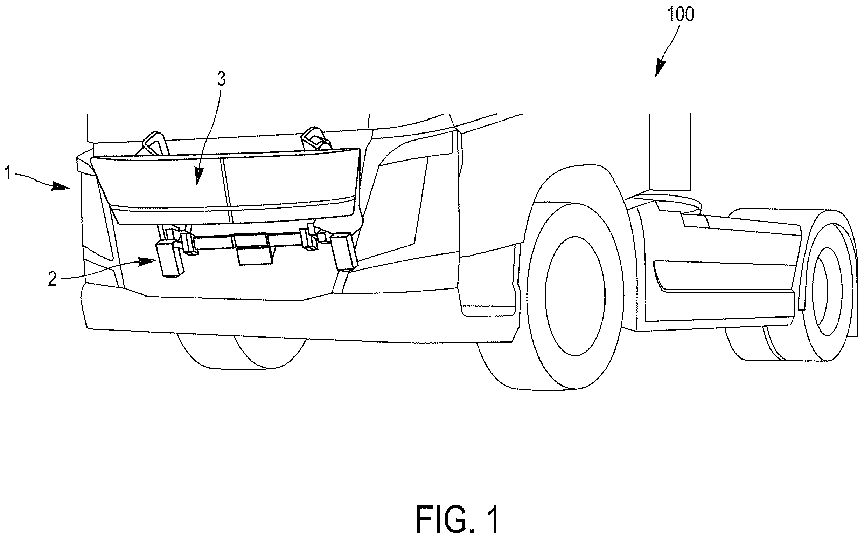

Figure 1 shows a truck 100 provided with a front lower part 1 according to the invention. The front lower part 1 comprises a front underrun protection 2 and a footstep assembly 3 mounted on the front underrun protection 2.

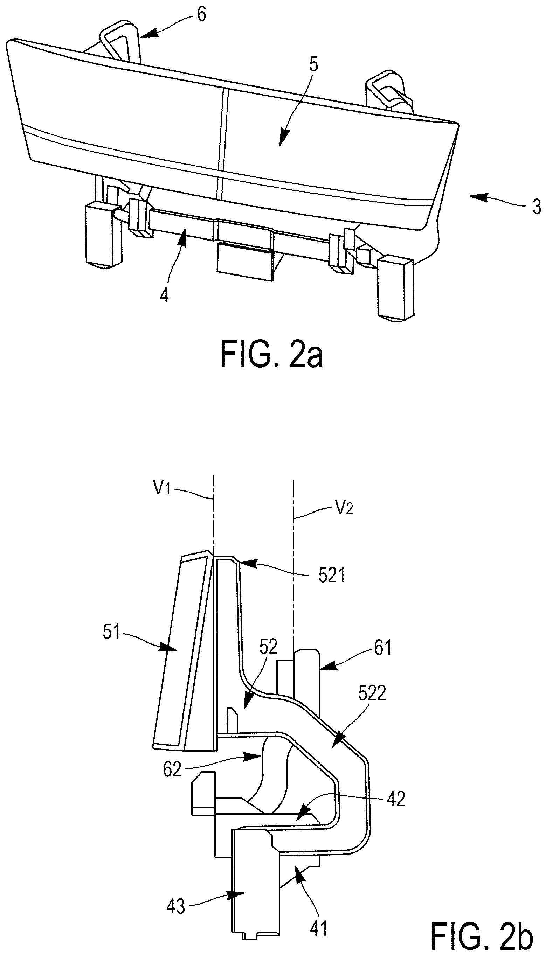

The foot assembly 3 is illustrated in Figure 1 in a totally close position. In this position, its size at the front of the truck 100 is the lowest possible, thus limiting the negative impacts on the aerodynamic performance of the vehicle when it is moving. This position is illustrated in Figures 2a and 2b.

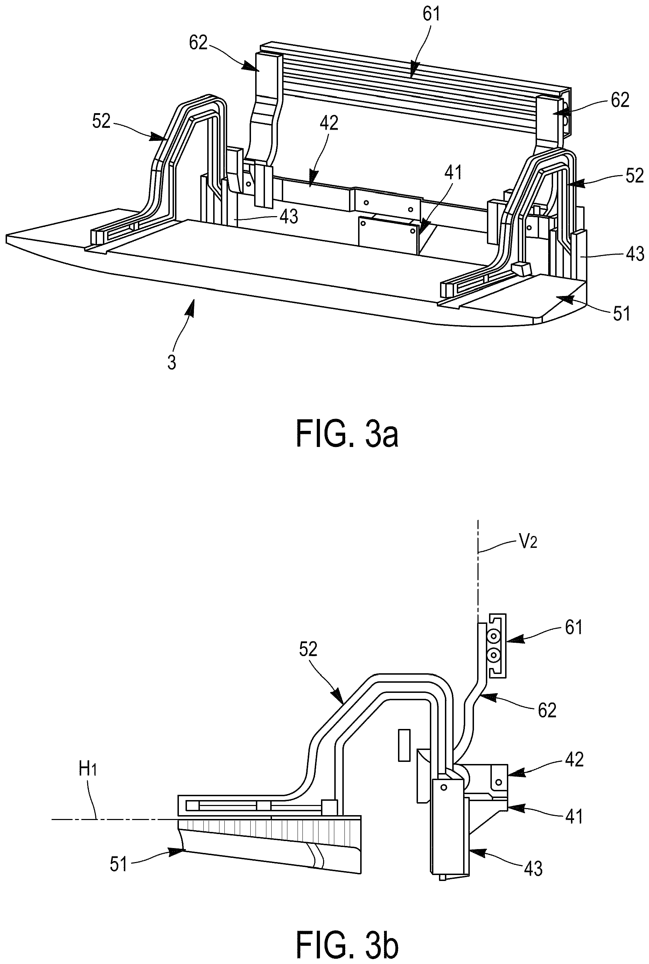

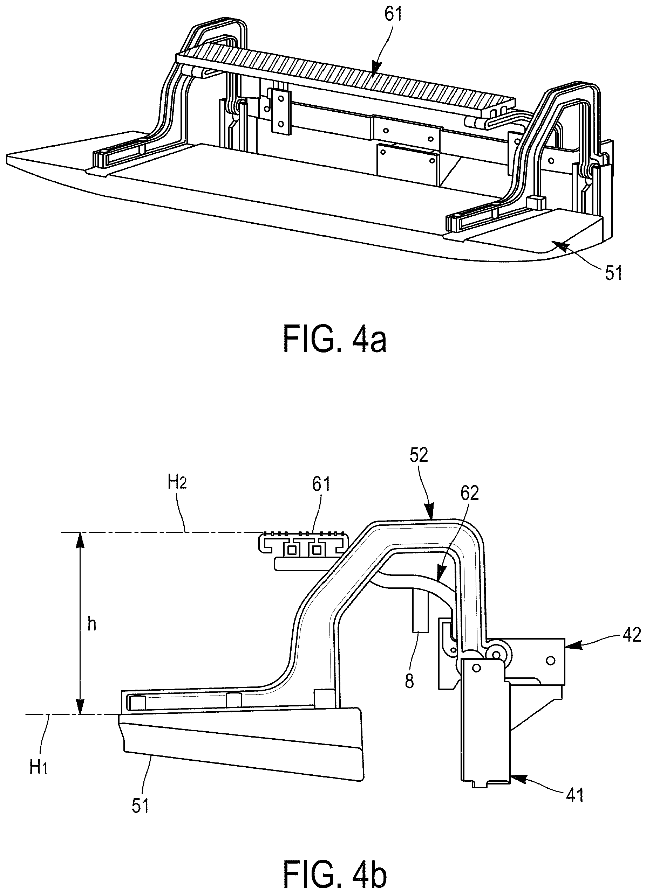

The foot assembly 3 may also be transferred in a partially open position, illustrated in Figures 3a and 3b, and in a totally open position, illustrated in Figures 4a and 4b.

As shown in Figures 2a and 2b, the footstep assembly 3 includes a main support 4, a first step 5 and a second step 6, both steps 5, 6 being hingedly connected to the main support 4. The main support 4 comprises a central beam 41 that is configured to be coupled to the front underrun protection 2 through bolts and/or screws for instance, the central beam 41 supporting a cross beam 42 at both ends of which are disposed U-shape mount supports 43, each mount support 43 being configured to pivotally support a corresponding mount bracket 52 of the first step 5. Each mount bracket 52 comprises a first right portion 521 that is fixedly connected to a platform 51 and a second U-shape portion 522 that is partially received in a respective mount support 43 of the main support 4. The platform 51 is sufficiently large to support the feet of a human and is adapted to support a load of 250 kg. The second step 6 comprises also a platform 61 that is less wide than the platform 51 of the first step 5. The platform 61 is pivotally connected to the cross beam 42 via two mount brackets 62, the mount brackets 62 being disposed between the mount brackets 52 of the first step 5. In the position of Figures 2a and 2b, the platforms 51, 61 are respectively aligned in vertical planes V1 and V2, the platform 61 being hidden by the platform 51 when the truck 100 is viewed from front to back.

The first step 5 can be moved from the close position illustrated in Figures 2a and 2b to the open position illustrated in Figures 3a and 3b. In this position, the platform 51 is aligned in a horizontal plane H1, thus allowing to a person to step onto it. At least one abutment element (not shown) may advantageously be provided in one mount support 43 so that at least one mount bracket 52 of the first step 5 abuts against said abutment element when the first step 5 is in its open position. The platform 61 of the second step 6 is in its folded position, i.e. aligned in the vertical plane V2, and thus does not allow to a person to step onto it. This partially open position of the foot assembly 3 may be used for performing cleaning and/or maintenance operations in the central parts of the truck cab.

The second step 6 can be moved from the folded position illustrated in Figures 3a and 3b to the unfolded position illustrated in Figures 4a and 4b. In this position, the platform 61 is aligned in a horizontal plane H2, thus allowing to a person to step onto it. At least one abutment element 8 is advantageously provided so that at least one mount bracket 62 of the second step 6 abuts against said abutment element 8 when the second step 6 is in its unfolded position. The horizontal plane H2 is above the horizontal plane H1 and vertically offset therefrom by a distance h. This totally open position of the foot assembly 3 may be used for performing cleaning and/or maintenance operations in the upper parts of the truck cab.

It is to be understood that the present invention is not limited to the embodiments described above and illustrated in the drawings; rather, the skilled person will recognize that many changes and modifications may be made within the scope of the appended claims.

## Claims

1. A front lower part (1) of a heavy vehicle (100), such as a truck, comprising a front underrun protection (2) and a footstep assembly (3) mounted on said front underrun protection (2), **characterized in that** the footstep assembly (3) comprises:
- a main support (4) configured to be coupled to the front underrun protection (2),
- a first step (5) hingedly connected to the main support (4) such that it can rotate from a close position, in which it is vertically oriented, and an open position, in which it is aligned in a first horizontal plane (H1),
- a second step (6) hingedly connected to the main support (4) such that it can rotate from a folded position, in which it is vertically oriented and hidden by the first step (5) when said first step (5) is in its close position, and a unfolded position, in which it is aligned in a second horizontal plane (H2) that is above the first horizontal plane (H1) and vertically offset therefrom.

2. The front lower part (1) according to claim 1, further comprising at least one first abutment element against which abuts the first step (5) in its open position.

3. The front lower part (1) according to claim 1 or claim 2, further comprising at least one second abutment (8) against which abuts the second step (6) in its unfolded position.

4. A vehicle (100) comprising a front lower part (1) according to anyone of the preceding claims.
